# EUROPÄISCHE PATENTSCHRIFT

(11) **EP 1 154 613 B1**
(45) Veröffentlichungstag und Bekanntmachung des Hinweises auf die Patenterteilung: **27.09.2006**
(21) Anmeldenummer: 01110679.6
(22) Anmeldetag: 02.05.2001
(51) Int. Cl.: H04M 1/02, H04M 1/18, H05K 5/06

(54) **Mobiltelefon mit Akkufach**
Mobile telephone with battery pack
Téléphone mobile avec compartiment de batterie

(30) Priorität: 10.05.2000 DE 10022703
(43) Veröffentlichungstag der Anmeldung: 14.11.2001
(73) Patentinhaber: BenQ Mobile GmbH & Co. OHG, 81667 München (DE)
(72) Erfinder: Beeker, Udo, 46509 Xanten (DE); Kremers, Arndt, 52066 Aachen (DE); Voigt, Christian, 46509 Xanten (DE)
(74) Vertreter: Epping - Hermann - Fischer

(56) Entgegenhaltungen:
- GB-A- 2 240 902
- US-A- 4 225 970
- US-A- 5 155 659

## Beschreibung

Die vorliegende Erfindung betrifft ein Mobiltelefon mit einem Akkufach, welches mittels eines Akkufach-Deckels verschließbar ist.

Moderne Mobiltelefone werden nicht nur im Büro, im Auto und auf der Strasse, sondern in zunehmendem Maße auch während unterschiedlichster Freizeitaktivitäten benutzt, bei denen die Gefahr besteht, dass Festkörper, Staub und Feuchtigkeit in die Geräte eindringen können.

Ziel der Mobiltelefon-Entwicklung ist es daher, Mobiltelefone zu entwickeln, welche einer IP-Schutzklasse zugeordnet werden können. Die IP(= International Protection)-Schutzklasse klassifiziert die Systeme entsprechend ihres Schutzgrades gegen das Eindringen von Festkörpern, Staub und Feuchtigkeit. Die IP-Bezeichnung besteht aus zwei Ziffern, wobei die erste Ziffer den Schutzgrad gegen Staub und die zweite Ziffer den Schutzgrad gegen Feuchtigkeit angibt. Die erste Ziffer kann von 0 bis 6 und die zweite Ziffer von 0 bis 8 variieren. Dabei entspricht die Ziffer 0 keinem Schutzgrad. Zum Beispiel bedeutet eine 5 als erste Ziffer, dass das Gerät gegen Staub geschützt ist, und eine 6 als erste Ziffer bedeutet, dass das Gerät vollkommen staubdicht ist. Eine 4 als zweite Ziffer besagt, dass das Gerät gegen Spritzwasser geschützt ist, während zum Beispiel eine 5 als zweite Ziffer aussagt, dass das Gerät gegen einen Wasserstrahl geschützt ist.

US 4 225 970 offenbart ein gegen Spritzer geschütztes Gehäuse mit einer Dichtung, die Dichtlippen aufweist.

Aufgabe der vorliegenden Erfindung ist es, ein Mobiltelefon der eingangs genannten Art anzugeben, bei welchem das Eindringen von Wasser in das Akkufach zuverlässig verhindert wird.

Diese Aufgabe wird erfindungsgemäß für das eingangs genannte Mobiltelefon dadurch gelöst, dass zwischen den äußeren Rändern des Akkufach-Deckels und des Akkufachs eine entsprechend der Berührungslinie zwischen den beiden Rändern verlaufende Zwischenlage einlegbar ist, welche auf jeder Seite mindestens eine Dichtlippe aufweist, wobei die Dichtlippen versetzt angeordnet sind, und wobei die Zwischenlage ein integrierter Teil eines in das Akkufach einlegbaren Rahmens ist.

Durch die versetzten Dichtlippen der Zwischenlage wird ein Eindringen von Wasser in das Akkufach zuverlässig vermieden, da eine labyrinthartige Abdichtung besteht. Gleichzeitig eignet sich die vorliegende Erfindung speziell für eine dreidimensional verlaufende Abdichtung, da durch den erfindungsgemäß vorgesehenen Rahmen eine gewisse Steifigkeit beziehungsweise Formhaltigkeit für die Dichtlippenkontur gegeben ist.

Die Erfindung wird nachstehend anhand eines in der beigefügten Zeichnung dargestellten Ausführungsbeispiels näher beschrieben.

Weitere zweckmäßige Weiterbildungen und Ausgestaltungen der Erfindung ergeben sich aus den Unteransprüchen, sowie aus der nachfolgenden Beschreibung eines Ausführungsbeispiels anhand der Zeichnung.

Es zeigen
- Figur 1: eine teilweise geschnittene Querschnittsansicht durch eine Dichtung zwischen einem Gehäuseteil und einem Akkufach-Deckel gemäß der vorliegenden Erfindung,
- Figur 2: eine teilweise geschnittene Querschnittsansicht der in Figur 1 gezeigten Abdichtung im verbauten Zustand,

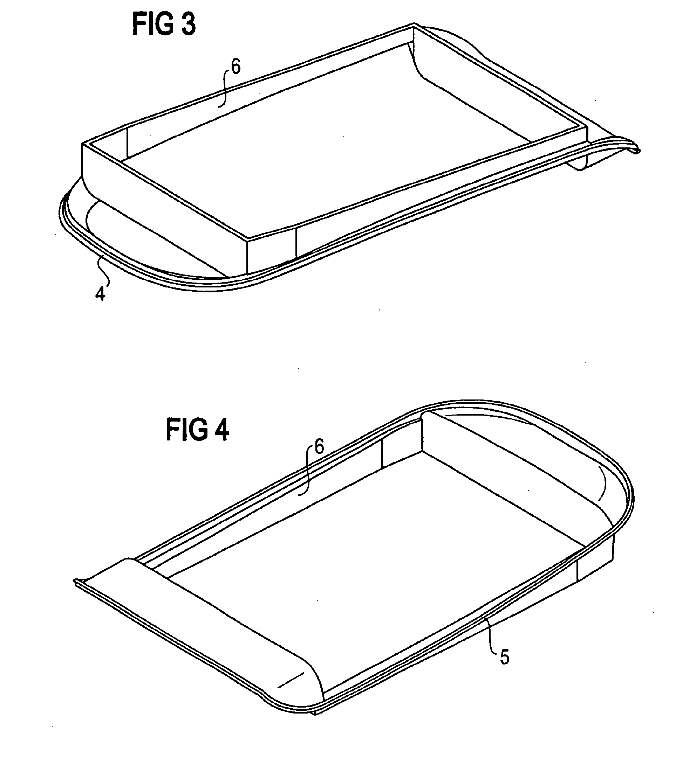

- Figur 3: eine perspektivische Ansicht der Einlegedichtung von unten,
- Figur 4: eine perspektivische Ansicht der Einlegedichtung von oben,
- Figur 5: eine perspektivische Ansicht einer Einlegedichtung mit einer zusätzlichen Stützkonstruktion und
- Figur 6: eine perspektivische Ansicht des in Figur 5 gezeigten Stützrahmens in ein Mobiltelefon.

Aufgabe der vorliegenden Erfindung ist es, wie bereits ausgeführt worden ist, eine dreidimensional verlaufende Abdichtung zwischen einem Gehäuseteil 1 eines Mobiltelefons und einem Akkufach-Deckel 2 zu schaffen, welcher ein Eindringen von Wasser und Staub verhindert.

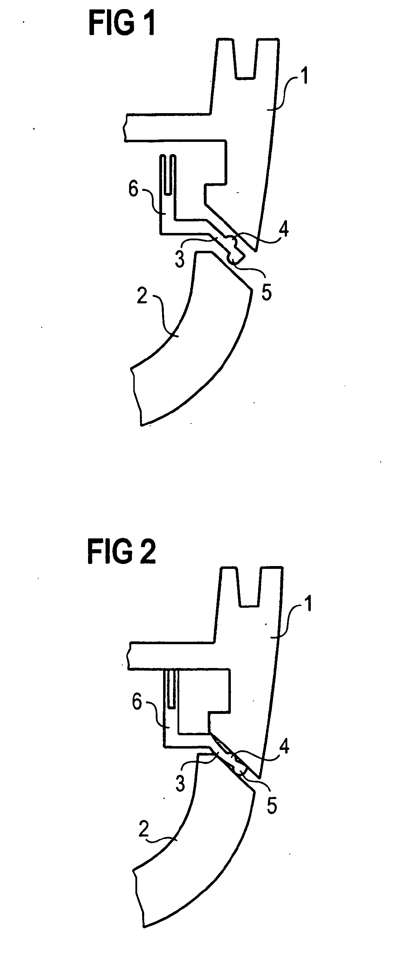

Die eigentliche Dichtung besteht aus einer Zwischenlage 3 mit einer unterseitigen Dichtlippe 4 und einer umlaufenden oberseitigen Dichtlippe 5. Diese Zwischenlage ist zum Beispiel einteilig mit einem Stützrahmen 6 verbunden. Die Dichtung, bestehend aus Zwischenlage 3, unterseitiger Dichtlippe 4, oberseitiger Dichtlippe 5 und Stützrahmen 6, folgt dem durch die Gehäusetrennung, das heisst, durch den durch das Design vorgegebenen dreidimensionalen Verlauf. Beim Einfügen des Akkufach-Deckels 2 auf das Gehäuseteil 1 werden die Dichtlippen 4, 5 im Querschnitt weitgehend so verformt, dass eine labyrinthartige Abdichtung (siehe Figur 2), entsteht. Der spezielle Querschitt der Zwischenlage 3 mit den Dichtlippen 4, 5 erlaubt geringe Überdeckungen von Akkufach-Deckel 2 und Gehäuseteil 1. Die Kompression der Abdichtung und somit die auftretenden Dichtkräfte, werden auf diese Weise gering gehalten.

Der Stützrahmen 6 dient der verbesserten Steifigkeit und Formhaltigkeit der dreidimensionalen Dichtlippenkontur.

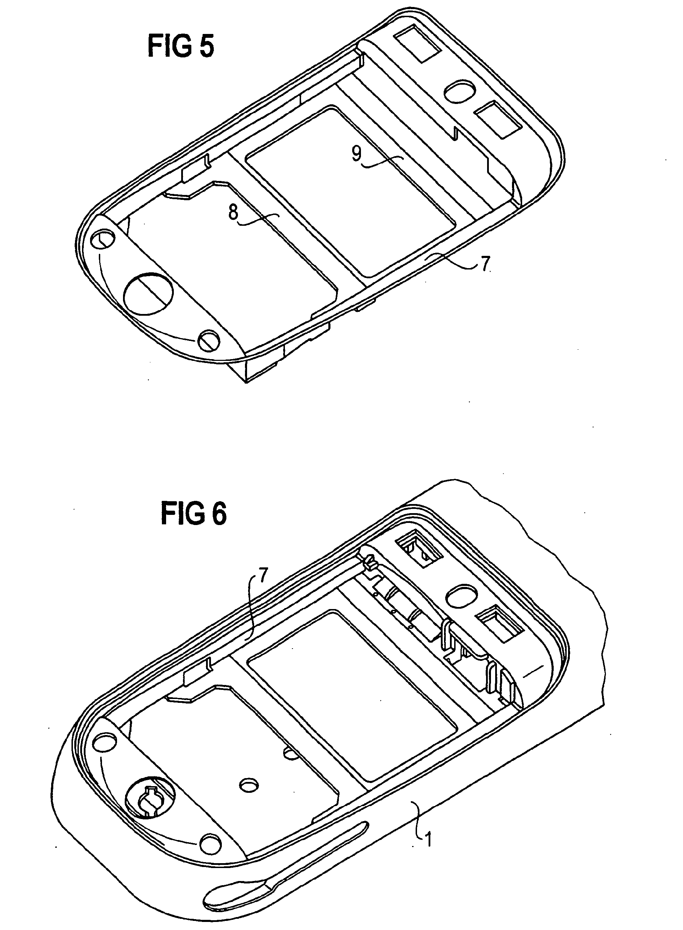

Wie den Figuren 5 und 6 zu entnehmen ist, kann zur weiteren Verbesserung der Steifigkeit und Formhaltigkeit ein Stützrahmen 7 mit einer zusätzlichen Stützkonstruktion vorgesehen werden, dabei besteht die Stützkonstruktion zum Beispiel aus zwei parallel verlaufenden Querstegen 8 und 9.

## Patentansprüche

1. Mobiltelefon mit einem Akkufach, welches mittels eines Akkufach-Deckels verschließbar ist,
wobei,
zwischen den äußeren Rändern des Akkufach-Deckels (2) und des Akkufachs eine entsprechend der Berührungslinie zwischen den beiden Rändern verlaufende Zwischenlage (3) einlegbar ist, welche auf jeder Seite mindestens eine Dichtlippe (4, 5) aufweist, wobei die Dichtlippen (4, 5) versetzt angeordnet sind, und wobei die Zwischenlage (3) ein integrierter Teil eines in das Akkufach einlegbaren Rahmens (6) ist.

2. Mobiltelefon nach Anspruch 1,
**dadurch gekennzeichnet,**
**dass** der Rahmen (6) Stützstreben (8, 9) aufweist.

## Claims

1. Mobile telephone with a battery compartment, which can be closed by means of a battery compartment lid,
whereby,
between the outer edges of the battery compartment lid (2) and the battery compartment, an intermediate layer (3) corresponding to the line of contact between the two edges can be inserted, which has at least one sealing lip (4, 5) on each side, whereby the sealing lips (4, 5) are offset in relation to one another, and whereby the intermediate layer (3) is an integrated part of a frame (6) which can be inserted into the battery compartment.

2. Mobile telephone according to Claim 1,
**characterized in that**
the frame (6) has support struts (8, 9).

## Revendications

1. Téléphone mobile avec un compartiment de batterie, qui peut être fermé au moyen d'un couvercle de compartiment de batterie,
une couche intermédiaire (3) agencée en fonction de la ligne de contact entre les deux bords pouvant être insérée entre les bords extérieurs du couvercle du compartiment de batterie (2) et du compartiment de batterie, laquelle couche présente sur chaque côté au moins une lèvre d'étanchéité (4, 5), les lèvres d'étanchéité (4, 5) étant disposées en décalé, et la couche intermédiaire (3) étant une partie intégrée d'un cadre (6) pouvant être intégré dans le compartiment de batterie.

2. Téléphone mobile selon la revendication 1,
**caractérisé en ce que**
le cadre (6) présente des montants de soutien (8, 9).
